# EUROPEAN PATENT SPECIFICATION

(11) **EP 2 625 905 B1**
(45) Date of publication and mention of the grant of the patent: **04.04.2018**
(21) Application number: 11767558.7
(22) Date of filing: 28.09.2011
(51) Int. Cl.: H04W 52/14, H04W 52/16, H04W 52/20, H04W 52/32

(54) **METHOD AND APPARATUS FOR RELIABLE CONTROL CHANNEL PERFORMANCE**
VERFAHREN UND VORRICHTUNG FÜR ZUVERLÄSSIGE STEUERKANALLEISTUNG
PROCÉDÉ ET APPAREIL POUR DES PERFORMANCES FIABLES DE CANAL DE RÉGULATION

(30) Priority: 05.10.2010 IN CH23932010
(43) Date of publication of application: 14.08.2013
(73) Proprietor: Google Technology Holdings LLC, Mountain View, CA 94043 (US)
(72) Inventor: KONDA, Pradap Venkatramanan, Erode 638011 (IN); CLAPP, Scott R., Sleepy Hollow, Illinois 60118 (US); NAGARAJ, Shirish, Hoffman Estates, Illinois 60192 (US)
(74) Representative: Boult Wade Tennant
(86) International application number: PCT/US2011/053560
(87) International publication number: WO 2012/047683

(56) References cited:
- EP-A1- 2 124 469
- EP-A2- 1 217 776
- WO-A1-2010/025270
- WO-A2-2008/100954
- US-A1- 2010 039 953

## Description

### Field of the Invention

The present invention relates generally to control channel performance and, in particular, to uplink control channel performance in Long Term Evolution for wireless communication systems.

### Background

Power control is common mechanism that is used to improve uplink and downlink channels in wireless communication systems. As is known, there are many different wireless communication networks and technologies, and each system or technology has different mechanisms and methods of performing power control. Moreover, there is a constant need to make power control more reliable.

In 3^{rd} and 4^{th} Generation wireless communication system such as LTE (Long Term Evolution), LTE-Advanced and IEEE 802.16m, there has been no effective method to indicate errors on the uplink control channel. According to LTE and other 4^{th} Generation systems, a CRC check is not provided. Uplink channels, such as the Physical Uplink Control Channel (PUCCH) operate at low signal-to-noise ratios (SNR) that can be in the less than 0 dB range. In addition, signal-to-interference-plus-noise ratio (SINR) estimates are difficult on the uplink at these operating SNRs, thus rendering them to be unreliable indicators of the signal quality for use in power control. SNR and SINR measurements also present issues because there are lots of variances within these measurements in the 4-5 dB range. Thus, the estimated ratios become meaningless from the power control perspective.

As is also understood, erroneous PUCCH results, such as channel quality index (CQI), Precoding Matrix Index (PMI), Rank Indication (RI) etc., should not be used by a network scheduler to allocate downlink resources. Using these erroneous results can lead to significant throughput loss due to packet loss. For uplink scheduling reliability and low latency, correct reception of the scheduling request indicator bit (SRI) on the uplink control channel is required.

In view of the foregoing, there is a need to measure the reliability of the channel and use it for a closed-loop power control (CLPC). An alternative method is needed to measure the quality of a signal on the channel. In addition, there is a need mitigate the effects on the system that are caused by erroneous decoding on the PUCCH. Another limitation, however, is that transmit power control for a PUCCH may be achieved by using only a limited number of transmit power control state commands. Thus, there is a need to design a system that can control the required error probability using the allowed set and limited number of commands. In addition, the quality metric can be reused to work with the scheduler to not use the results of the erroneous signals that are measured.

PCT patent application publication no. WO 2010/025270 describes a serving base station, in a wireless communications system, performs outer and closed power control for an overhead channel and a traffic channel for data, either of which can carry an acknowledgement (Ack) channel and Channel Quality Indicator (CQI) channel on an uplink from User Equipment (UE). In an exemplary aspect, data packet communication is implemented in 3GPP LTE Rel. 8 wherein the uplink has a Single Carrier Frequency Division Multiplex (SC-FDM) uplink waveform. The UE performs open loop power control by a determining transmit power spectral density value by using received energy per symbol for a reference signal.

### Summary

In accordance with the present invention, there is provided method and an apparatus as recited in the accompanying claims.

### Brief Description of the Figures

The accompanying figures, where like reference numerals refer to identical or functionally similar elements throughout the separate views and which together with the detailed description below are incorporated in and form part of the specification, serve
to further illustrate various embodiments and to explain various principles and advantages all in accordance with the present invention.
FIG. 1 is an example wireless communication network that operates in accordance with some embodiments of the invention.
FIG. 2 is a block diagram illustrating the correlation between erasure events and error events for given log likelihood ratio values in accordance with some embodiments of the invention.
FIG. 3 is a chart of different transmit power command sets used in accordance with some embodiments of the invention.
FIG. 4 is a flow diagram that illustrates how to determine the frequency of use of the transmit power command sets to achieve target values in accordance with some embodiments of the invention.
FIG. 5 is a chart showing values determined for different targets in accordance with some embodiments of the invention.
FIGs. 6 and 7 is a flow diagram that determined the transmit power control sets to use at an event time.
FIGs. 8 and 9 are diagrams that demonstrate power control simulations using the error event metrics described in connection with some embodiments of the invention.
FIG. 10 is a diagram that illustrates the changes in sector throughput based on threshold values determined in accordance with some embodiments of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the present invention.

### Detailed Description

In this invention, we describe a reliability metric based on an erasure rate that can be used for power control. We also describe a method for power control that uses the finite states of power control commands. Before describing in detail embodiments that are in accordance with the present invention, it should be observed that the embodiments reside primarily in combinations of method steps and apparatus components related to a method and apparatus for reliable control channel performance. Accordingly, the apparatus components and method steps have been represented where appropriate by conventional symbols in the drawings, showing only those specific details that are pertinent to understanding the embodiments of the present invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ...a" does not, without more constraints, preclude the existence of additional identical elements in the process, method, article, or apparatus that comprises the element.

It will be appreciated that embodiments of the invention described herein may be comprised of one or more conventional processors and unique stored program instructions that control the one or more processors to implement, in conjunction with certain non-processor circuits, some, most, or all of the functions for the reliable control channel performance described herein. The non-processor circuits may include, but are not limited to, a radio receiver, a radio transmitter, signal drivers, clock circuits, power source circuits, and user input devices. As such, these functions may be interpreted as steps of a method to perform the method of reliable control channel performance. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

The present invention is directed to a method of achieving target error rates on a channel between user equipment and a network node. The method includes indicating an error event on a first channel between user equipment and a network node using a bit erasure. The method also includes controlling transmit power used by the user equipment on the first channel using predefined transmit power command values received by the user equipment on a second channel, wherein the second channel being between the user equipment and the network node. The transmit power is controlled based on the indicated error event to achieve a target error rate on the first channel. In an embodiment, the method indicates the error event using a log likelihood ratio to indicate a reliability of a bit being an actual value. A first threshold may be used to determine the reliability of the bit being an actual value and the error event is a number of log likelihood ratio values being over a second threshold. The predefined transmit power command values include a predefined power up command and a predefined power down command. The method can also include using a set proportion of predefined power up commands and predefined power down commands over a given number of events. The predefined power up command being used when an error event is indicated, and the predefined power down command being used when no error event is indicated. Moreover, the method can include initializing transmit control bits to achieve a probability of the error event utilizing up command and down command values.

In another embodiment, a method also achieves the target error rates. The method includes determining erasure counts of an uplink channel between a user equipment and a network node, generating an error event indication from the determined erasure count, and determining transmit power control commands to adjust the power used by the user equipment based on the error event. The method can also include sending target power control to the user equipment using the transmit power control commands. In an embodiment, the method determines the target power control. In addition, the method can include using a random number variable with the percentages of use of the transmit power commands to achieve the target power control. The error event indication is used to determine use of the up command and the down command.

An apparatus is also disclosed. The apparatus includes a transceiver to transmit and receive commands between user equipment and a network node and a processor coupled to the transceiver. The processor indicates an error event on a first channel between the user equipment and the network node using a bit erasure and controlling the transmit power used by the transceiver on the first channel using predefined transmit power command values received on a second channel between the user equipment and the network node and controlling the transmit power on the first channel based on the indicated error event to achieve a target error rate on the first channel.

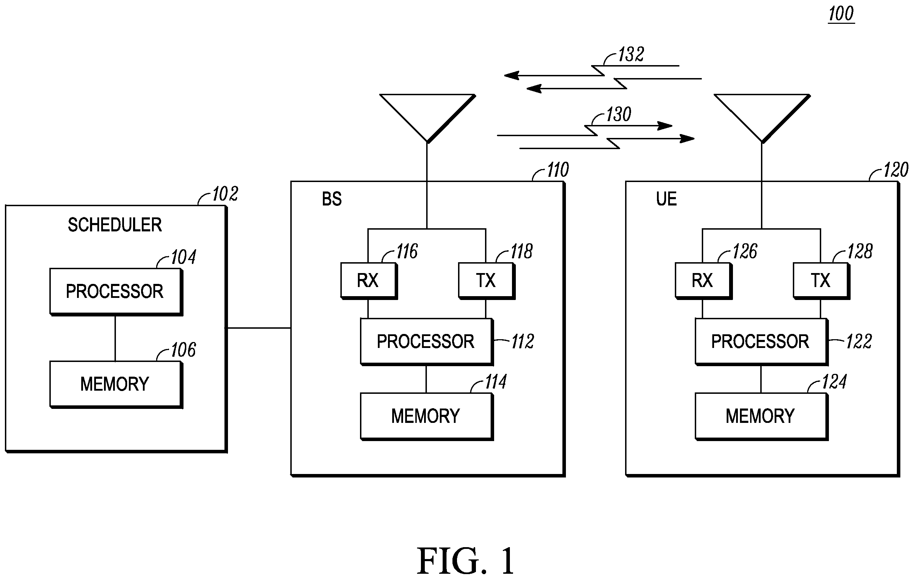

The present invention may be more fully described with reference to the figures. FIG. 1 is a block diagram of a wireless communication system 100 in accordance with an embodiment of the present invention. Communication system 100 includes a user equipment (UE) 120, such as but not limited to a cellular telephone, a radiotelephone, a smartphone or a Personal Digital Assistant (PDA), personal computer (PC), or laptop computer equipped for wireless communications. Communication system 100 further includes a base station (BS) 110 that provides communication services to users' equipment, such as UE 120, residing in a coverage area of a radio access network (RAN) via a radio link. Radio link comprises a downlink channel 130 and an uplink channel 132 that each comprises multiple physical and logical communication channels, including multiple traffic channels and multiple signaling channels. The multiple channels for the downlink 130 can include a Physical Downlink Control Channel (PDCCH) and a Physical Downlink Shared Chanel (PDSCH), and the multiple channels for the uplink 132 can include a Physical Uplink Control Channel (PUCCH) and a Physical Uplink Shared Channel (PUSCH).

Each of BS 110 and UE 120 includes a respective processor 112, 122, such as one or more microprocessors, microcontrollers, digital signal processors (DSPs), combinations thereof or such other devices known to those having ordinary skill in the art, which processor is configured to execute the functions described herein as being executed by the BS and UE, respectively. Each of BS 110 and UE 120 further includes at least one memory device 114, 124 that may comprise random access memory (RAM), dynamic random access memory (DRAM), and/or read only memory (ROM) or equivalents thereof, that maintain data and programs that may be executed by the associated processor and that allow the BS and UE to perform all functions necessary to operate in communication system 100. Each of BS 110 and UE 120 also includes a respective radio frequency (RF) transmitter 118, 128 for transmitting signals over radio link 130 and a respective RF receiver 116, 126 for receiving signals via radio link 130. The transmitter 118, 128 and receiver 116, 126 are often referred to collectively as a transceiver.

Communication system 100 further includes a scheduler 102 that is coupled to BS 110 and that performs the scheduling functions described herein. Scheduler 102 includes a processor 104 such as one or more microprocessors, microcontrollers, digital signal processors (DSPs), combinations thereof or such other devices known to those having ordinary skill in the art, which processor is configured to execute the functions described herein as being executed by the scheduler. Scheduler 102 further includes an at least one memory device 106 that may comprise random access memory (RAM), dynamic random access memory (DRAM), and/or read only memory (ROM) or equivalents thereof, that maintains data and programs that may be executed by the associated processor and that allow the scheduler to perform all functions necessary to operate in communication system 100. While scheduler 102 is depicted as an element separate from BS 110, in other embodiments of the invention, scheduler 102 may be implemented in the BS, and more particularly by processor 112 of the BS based on programs maintained by the at least one memory device 114 of the BS.

The functionality described herein as being performed by scheduler 102, BS 110, and UE 120 is implemented with or in software programs and instructions stored in the respective at least one memory device 106, 114, 124 associated with the scheduler, BS, and UE and executed by the processor 104, 112, 122 associated with the scheduler, BS, and UE. However, one of ordinary skill in the art realizes that the embodiments of the present invention alternatively may be implemented in hardware, for example, integrated circuits (ICs), application specific integrated circuits (ASICs), and the like, such as ASICs implemented in one or more of the scheduler, BS, and UE. Based on the present disclosure, one skilled in the art will be readily capable of producing and implementing such software and/or hardware without undo experimentation.

In order for BS 110 and UE 120 to engage in a communication session, BS 110 and UE 120 each operates in accordance with known wireless telecommunications standards. In an embodiment, communication system 100 is a 3GPP LTE (Third Generation Partnership Project Long Term Evolution) communication system that operates in accordance with the 3GPP LTE standards. To ensure compatibility, radio system parameters and call processing procedures are specified by the standards, including call processing steps that are executed by the BS and UE. However, those of ordinary skill in the art realize that communication system 100 may be any wireless communication system that allocates radio link resources, such as a 3GPP UMTS (Universal Mobile Telecommunication System) communication system, a CDMA (Code Division Multiple Access) communication system, a CDMA 2000 communication system, a Frequency Division Multiple Access (FDMA) communication system, a Time Division Multiple Access (TDMA) communication system, or a communication system that operates in accordance with any one of various OFDM (Orthogonal Frequency Division Multiplexing) technologies, such as a Worldwide Interoperability for Microwave Access (WiMAX) communication system or a communication system that operates in accordance with any one of the IEEE (Institute of Electrical and Electronics Engineers) 802.xx standards, for example, the 802.11, 802.15, 802.16, or 802.20 standards.

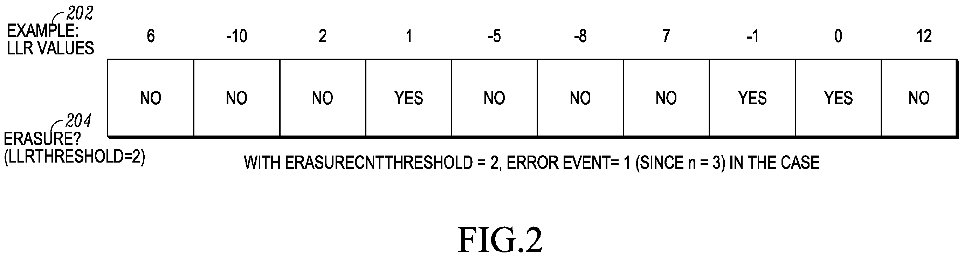

Turning to FIG. 2, a block diagram is shown that illustrates the results of a method that reliably indicates error events on an uplink control channel 132. The error events are indicated using a log likelihood ratio (LLR) measurement for detected erasure events on the uplink and in particular the PUCCH. An erasure event on an uplink channel is defined by the number of coded bit erasures that can be used as the error event metric. The coded bit can be defined to be an erasure if the magnitude of the LLR of that coded bit is less than a given threshold. Thus, a receiver on the uplink can make an estimate based on the soft symbols received that is an estimate of the accuracy of what was sent and received.

In an embodiment, the LLR is used to indicate if a bit that is received is more or less likely to be a given bit, i.e. to be a 1 or 0. The LLR provides a more convenient mechanism to indicate the probability of a bit or series of bits being received accurately. As the likelihood of an accurately received bit is received is greater, the absolute value of the LLR will be closer to 1. Thus, a large positive LLR indicates that the likelihood of the bit being a 0 is high and a large negative LLR indicates that the likelihood of the bit being a 1 is high. Likewise, a positive LLR that is close to 0 indicates that the likelihood of a bit being a 0 is low, and a negative LLR that is close to 0 indicates that the likelihood of a bit being a 1 is low. In other words, the magnitude of the LLR value correlates to the reliability of the received bit where the sign of the value indicates whether the bit is a 0 (positive LLR) or 1 (negative LLR)

As it can be appreciated, an erasure event for every bit can be determined, and such an erasure event can be measured using the LLR. Thus, 20 erasure events can be determined for 20 bits. In order to lessen the burden on the PUCCH, a coded bit can be defined to indicate an erasure depending on the magnitude of the LLR. Moreover, an erasure may only need to indicate when the LLR raises to given threshold so that an error event does not need to be indicated when the LLR is above a given threshold. This is so because the closer the absolute value of the LLR being to zero indicates a higher probability of an error event for that bit.

In view of the foregoing, a value *n* can be used to indicate the number of erasures that are required in a series of bits. The value *n* can indicate the number of LLRs, which indicate bits that are less than a determined LLR threshold. In an embodiment, a threshold can be determined for which an erasure is required based on the error event likelihood, which is indicated by the LLR. In addition, an Erasure Count Threshold can be set that indicates a number of acceptable error events in a series of bits. For a series of bits, if *n* is greater than the Erasure Count Threshold then the error event is positive for that series and error event will be indicated by a bit of 1. Otherwise, a bit of 0 will indicate that *n* is less than the Erasure count Threshold and there is an acceptable number of error events in the series of bits. As can be understood, both the LLR threshold and the Erasure Count Threshold are configurable valued depending on the requirements of the channel.

FIG. 2 shows the LLR values 202 for a series of bits. In the example shown, the LLR Threshold is set to 2. As is determined, the erasure 204 for each bit is shown using the given LLR values for each bit. Erasures are designated for bits with LLRs less than 2. For the erasure 204, it is determined that *n*=*3.* With an Erasure Count Threshold of 2, a error event is detected for the series of bits, and a value of 1 will be associated with this particular PUCCH transmission.

Uplink power control can be based on the determined error event for the series of bits. As can be appreciated, power control can be varied depending on the thresholds used for the LLR Threshold and the Erasure Count Threshold. According to LTE standards, a transmit power control (TPC) can be performed using 2-bits. Thus, a 2-bit TPC can be sent on the downlink in an assignment according to downlink control information format. As is understood, typical values for TPC are +3.0, +1.0, 0.0 and -1.0 dB. According to these values received on the downlink, the uplink TPC is controlled by raising power 3.0 or 1.0 dB, leaving the power at the same level or lowering power 1.0 dB. The aim is to control an error or erasure event rate on the uplink to a target probability (PER_{target}) on the uplink.

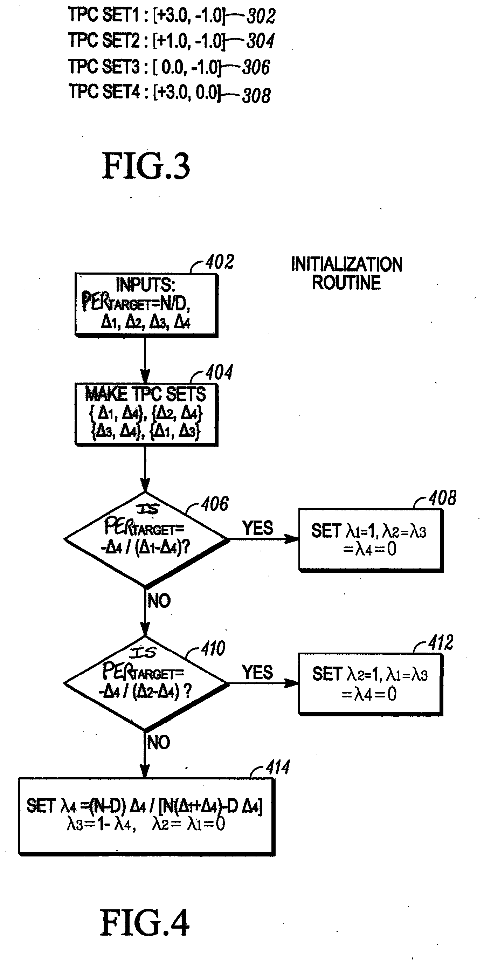

Using the 4 typical TPC values mentioned above, a number of combinations can be used. Four different combinations can be selected based on the LTE's use of 2-bit TPC. An example of these 2-bit sets, TPC sets, is shown in FIG. 3. The first bit can be used to denote a UP command value thereby adjusting the power control up according to the value of the UP command. The second bit can be used to denote a DOWN command value thereby adjusting the power control down according to the value of the DOWN command. As an example, the TPC sets are given as set 1 [+3.0, -1.0] 302, set 2 [+1.0, -1.0] 304, set 3, [0.0, -1.0] 306 and +3.0, 0.0] 308.

The TPC sets as shown provide limited power control. Nonetheless, the desired target PER_{target} may require more refinement in the UP and DOWN commands. Thus, each of the UP and DOWN commands can be used for a certain percentage of time. These percentages are designated as λ values. The λ values permit the multiple set of TPC commands to use different combinations for different percentages to get a desired erasure rate for a series of bits. According to this method, at every opportunity of sending a TPC command, a two state TPC command set from FIG. 3 is chosen using the appropriate λ value. Once the TPC set has been chosen, it is determined whether an error or erasure event has been detected. If there has been such an error or erasure event, an UP command is chosen from the set. Otherwise a DOWN command from the same set is chosen.

For example, a 1% error rate may be desired but cannot be measured because there is no CRC provided in LTE. In an embodiment, an erasure rate can be used to achieve the desired error rate through simulation. As discussed above in connection with FIG. 1, a LLR is used determine the likelihood of a given bit has of being an error. A target erasure rate of 10%, which can correspond to the 1% error rate, is set using the combination of the LLR Threshold and Erasure Count Threshold. The TPC sets 302-308 can be sent according to the appropriate λ value to get the desired erasure rate. At those times when a TPC command is provided, the determination is made of which TPC set 302-308 is sent.

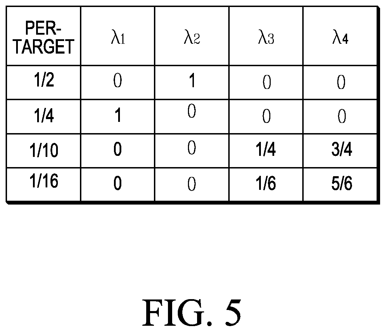

FIG. 4 is a flow diagram that illustrates a method 400 of determining λ values, which are the probability targets for error events that use up command values and down command values of a TPC Set. Moreover the λ values designate the proportion of use for the up command values and down command values used to achieve the desired error rate. The method starts by determining given inputs. To begin, a first input is set 402 as the PER_{target} which is a given percentage. The PER_{target} has a numerator N and a denominator D. PER_{target} can have any given percentage. In addition, inputs are provided as Δ₁, Δ₂, Δ₃, Δ₄ where the each Δ is one of the TPC values that make up the TPC sets. As mentioned above, these TPC values are +3.0, +1.0, 0.0, -1.0. FIG. 5 illustrates different PER_{target}s provide designated λ values according to the methods described where the λ value is the percentage of use for each TPC value sets. From the TPC values, TPC sets are made 404 where sets are, for example, {Δ₁, Δ₄}, {Δ₂, Δ₄}, {Δ₃, Δ₄}, {Δ₁, Δ₃}.

The method 400 continues by determining if the PER_{target} value can be determined using designated TPC values, Δ. In step 406, it is determined if PER_{target} can be determined from Δ₄ and Δ₁ according to the formula, -Δ₄/(Δ₁-Δ₄). If this is true, then in step 408, λ₁=1, λ₂=λ₃=λ₄=0. As seen in FIG. 5, this is true for PER_{target}=1/2. If this is not true, in step 410 it is determined if PER_{target} can be determined from Δ₄ and Δ₂ according to the formula, -Δ₄/(Δ₂-Δ₄). If this is true, then in step 412, λ₂=1, λ₁=λ₃=λ₄=0. As seen in FIG. 5, this is true for PER_{target}=1/4. If this is not true, then the λ values are set using the desired PER_{target} value according to the formula λ₄=(N-D)Δ₄/(N(Δ₁+Δ₄)-DΔ₄), λ₃=1-λ₄, λ₂=λ₁=0. As seen in FIG. 5, if PER_{target}=1/10, λ₄=3/4 and λ₃=1/4 and PER_{target}=1/16, λ₄=5/6 and λ₃=1/6. As understood from FIGs. 4 and 5, the λ is the percentage of use of the TPC set used for a given PER_{target} such that the λ₁ corresponds to TPC set 1, λ₂ corresponds to TPC set 2, λ₃ corresponds to TPC set 3 and λ₄ corresponds to TPC set 4.

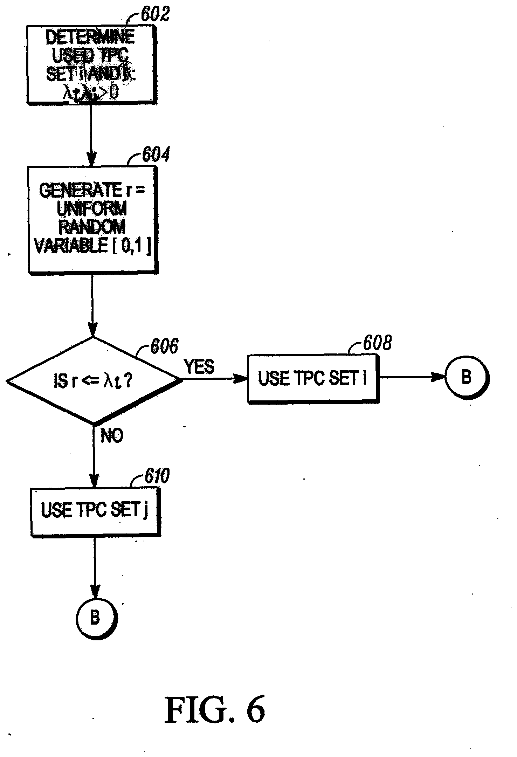

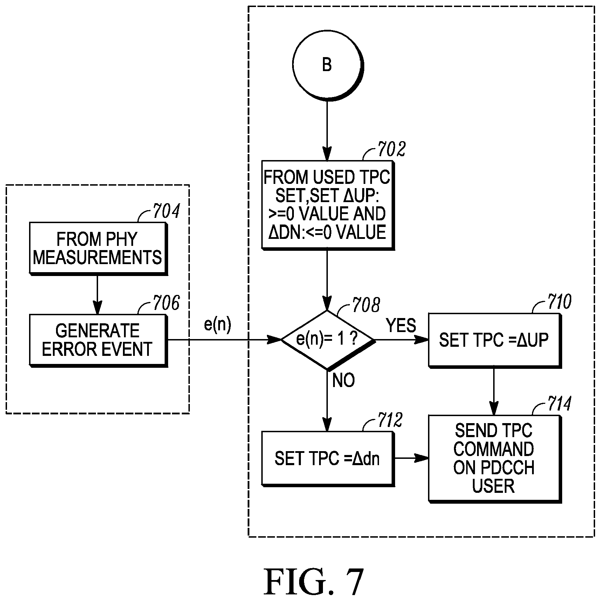

Turning to FIGs. 6 and 7, a method 600 is shown that determines which TPC set to use at an event time. As is understood, the described method uses the indicated error event received on a downlink channel to control the transmit power used by the user equipment on the uplink channel. The transmit power is controller using predefined transmit power commands, as described in connection with FIG. 4, received by the user equipment on the downlink channel. As is understood, the transmit power is controlled based on the indicated error event, which is dependent on the selected erasure control threshold, to achieve the target error rate.

At step 602, a given set of λ values is provided, which has been determined according to the method in FIG. 4 and from the desired PER_{target}. With the λ values, it is determined which TPC sets i and j are to be used when λᵢ and λⱼ are greater than 0. For example, if the PER_{target} is 1/2, λ₁/TPC set 1, λ₃/TPC set 3 and λ₄/TPC set 4 are used 0% while λ₂/TPC set 2 is used 100%. If PER_{target} is 1/16, λ₁/TPC set 1 and λ₂/TPC set 2 are used 0%, λ₃/TPC set 3 is used 16.67% and λ₄/TPC set 4 is used 83.33%. To achieve these percentages, a value *r* is generated 604 that uses a uniform random variable between 0 and 1. It is then determined 606 if *r* <= λᵢ. If this is true, the TPC set of i is used according to step 608. Otherwise, in step 610, TPC Set j is used. In view of the foregoing, it is understood that for PER_{target} of 1/2, TPC Set 1 is used when for the Δup Δdown values. In addition, PER_{target} of 1/16 is achieved using TPC Sets of λ3 and λ4 according to the random number variable.

The operation of FIG. 6 continues in FIG. 7. Accordingly, step 702 indicates that from the TPC set there is a Δup, which is greater than or equal to 0 and a Δdown, which is less than or equal to 0. This is seen in FIG. 3 with the TPC sets. Step 704 determines if the Δup and Δdown values for the TPC set will be used. This is determined from the physical measurements that are observed in step 706, which can be determined by observation of the series of bits and as described above in connection with FIG. 2. As is understood, steps 704-706 determines whether there is an error event or not based on the physical measurements, e.g. the LLR erasure counts. Step 706 generates the error event e(n) according to the LLR of the erasures. If it is determined in step 708 the error event e(n)=1 then an TPC is set in step 710 to the Δup value. Otherwise, it is determined that the error event e(n)=0 and the TPC is set in step 712 to the Δdown value. Accordingly, at every instance it is determined whether to send an UP or DN command from the selected TPC set based on the error event. In an embodiment, the PUSCH TPC is sent 714 with a PDCCH UL grant. Likewise, a PUCCH TPC is sent 714 with a PDCCH DL assignment.

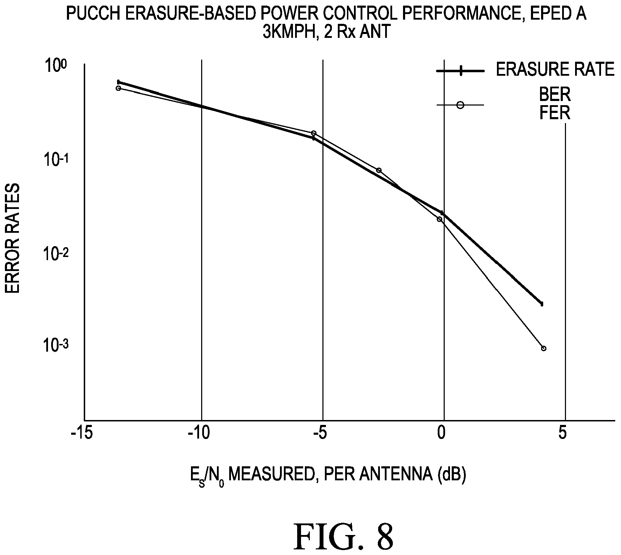

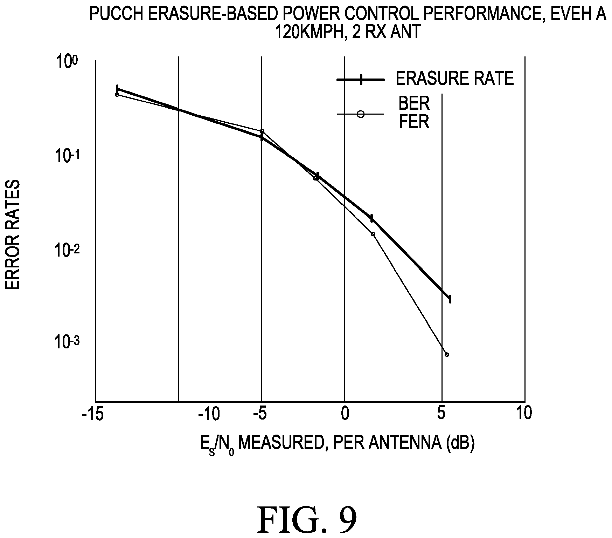

FIGs. 8 and 9 demonstrate power control simulations using the error event metrics described above. As shown, the bit error rate (BER) and the frame error rate (FER) are plotted for the given parameters. The Erasure Rate, which is determined according to the determined the principles described, is also plotted. As seen, the erasure rate tracks the physical metrics such as BER and FER and is therefore shown to be reliable metric. In addition, the power control algorithm that is described above is proven and converges to the required target probabilities. Moreover, the power control algorithm corresponds well with the target erasure rate.

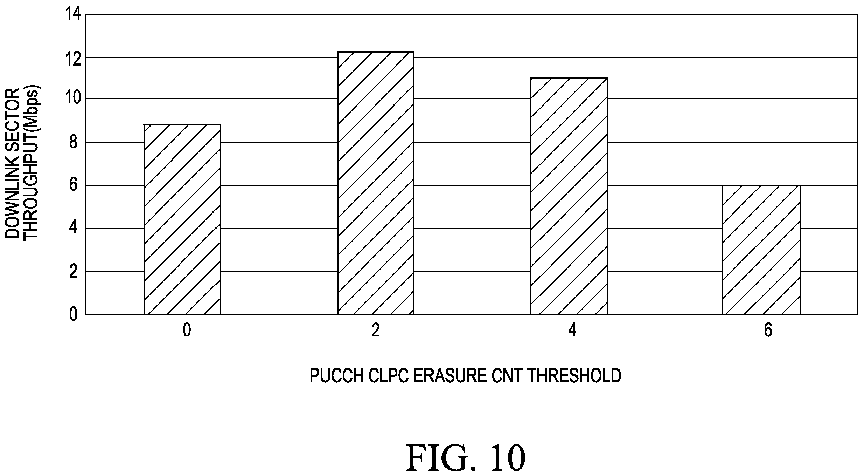

FIG. 10 illustrates results of measurements to determine an optimum erasure count threshold. As is understood from the description, the erasure count threshold controls how often up commands and down commands are sent. The erasure count threshold determines if an error event is generated, and up commands and down commands are sent according to generated error events. Thus, the erasure count thresholds indirectly control error rate. As seen in FIG. 10, the erasure count threshold affects the downlink sector throughput. As seen, the optional erasure count threshold is determined to be 2. A larger threshold, e.g. 4 or 6, results in less power control, higher BLER on the PUCCH and impacts the downlink throughput due to unreliable feedback that degrades performance. Thus, there is a trade off regarding setting the erasure count threshold. If the threshold is set too low, actual reported values could be ignored, unnecessary HARQ retransmissions be forced and CQI, requested rank and PMI reporting intervals could be delayed. On the other hand if the threshold is set to high, more erroneous PUCCH decodes will occur.

The erasure count threshold as described can be used to enhance scheduler robustness. In lieu of this mechanism, data received from erroneous PUCCH could lead to incorrect characterization of channel conditions. This may result in under-, over- or sub-optimal utilization allocation of PDCCH resources. It may also cause a premature termination of HARQ processes. Network operators may also have to allocate additional PUCCH resources to compensate for the lack of the CRC. On the other hand, if error events are detected using the principles described, appropriate measures can be taken by the scheduler. If an error event is properly detected, the scheduler can use parameters, such as CQI, diffCQI, PMI and rank indications from previous PUCCH transmissions with erasure counts below the predefined threshold instead of the erroneous PUCCH transmission. An error event can also be interpreted as a NACK for ACK/NACK bits. The same mechanism can also be used to qualify the reliability of the uplink control information when multiplexed with the data channel (PUSCH).

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of present invention as defined by the appended claims.

## Claims

1. A method comprising:
indicating an error event for a series of bits on a first channel between a user equipment (120) and a network node (110) using a log likelihood ratio measurement for an erasure event, the erasure event defined by a number of coded bit erasures; and
controlling transmit power used by the user equipment (120) on the first channel using predefined transmit power command values received by the user equipment on a second channel, wherein the second channel being between the user equipment (120) and the network node (110) and wherein transmit power being controlled based on the indicated error event to achieve a target error rate on the first channel.

2. The method of claim 1 wherein indicating the error event comprises using the log likelihood ratio value of a bit to indicate a reliability of the bit being an actual value.

3. The method of claim 2 wherein a first threshold is used to determine the reliability of the bit being an actual value, wherein a bit is defined to be a coded bit erasure when the magnitude of the log likelihood ratio value of the bit is less than the first threshold.

4. The method of claim 2 wherein the error event is indicated when the number of log likelihood ratio values of the series of bits having a magnitude less than a first threshold is over a second threshold.

5. The method of claim 1 wherein the predefined transmit power command values include a predefined power up command and a predefined power down command.

6. The method of claim 5 further comprising using a set proportion of predefined power up commands and predefined power down commands over a given number of events.

7. The method of claim 5 wherein the predefined power up command being used when an error event is indicated.

8. The method of claim 5 wherein the predefined power down command being used when no error event is indicated.

9. The method of claim 1 further comprising initializing transmit control bits to achieve a probability of the error event utilizing up command and down command values.

10. A method comprising:
determining erasure counts for a series of bits of an uplink channel between a user equipment (120) and a network node (110);
generating (706) an error event indication for the series of bits using a log likelihood ratio measurement of the determined erasure count;
determining (708, 710, 712) transmit power control commands to adjust the power used by the user equipment (120) based on the error event, and
sending (714) target power control to the user equipment (120) using the transmit power control commands.

11. The method of claim 10 further comprising determining the target power control.

12. The method of claim 10 further comprising initializing of percentages of use of the transmit power control commands to adjust the power used by the user equipment (120) to achieve a target power control.

13. The method of claim 12 further comprising using a random number variable with the percentages of use of the transmit power commands to achieve the target power control.

14. The method of claim 10 wherein the transmit power commands include an up command and a down command and the error event indication is used to determine use of the up command and the down command.

15. The method of claim 10 wherein generating (706) the error event comprises using the log likelihood ratio value of a bit to indicate a reliability of the bit being an actual value and the error event indication is generated when the number of log likelihood ratio values of the series of bits having a magnitude less than a first threshold is over a second threshold.

16. An apparatus comprising:
a transceiver (126, 128) to transmit and receive commands between a user equipment (120) and a network node (110);
a processor (122) coupled to the transceiver (126, 128),
the apparatus being **characterized in that** the processor is configured to indicate an error event for a series of bits on a first channel between the user equipment (120) and the network node (110) using a log likelihood ratio measurement for an erasure event, the erasure event defined by a number of coded bit erasures, and control the transmit power used by the transceiver (126, 128) on the first channel using predefined transmit power command values received on a second channel between the user equipment (120) and the network node (110) and control the transmit power on the first channel based on the indicated error event to achieve a target error rate on the first channel.

17. The apparatus of claim 16 wherein the error event uses the log likelihood ratio value of a bit to indicate the reliability of the bit being an actual value.

18. The apparatus of claim 16 wherein the processor (122) is configured to control the transmit power using a set proportion of power up commands and power down commands over a given number of events.

19. The apparatus of claim 16 wherein the processor (122) is configured to initialize transmit control bits to achieve a probability of an error event target utilizing up command values and down command values.

20. The apparatus of claim 16 wherein the processor (122) is configured to use a random number variable with the percentages of use of the transmit power commands to achieve the target power control.

21. The apparatus of claim 17, wherein the processor is configured to indicate the error event when the number of log likelihood ratio values of the series of bits having a magnitude less than a first threshold is over a second threshold.

## Patentansprüche

1. Verfahren, umfassend:
Angeben eines Fehlerereignisses für eine Serie von Bits auf einem ersten Kanal zwischen einem Benutzergerät (120) und einem Netzwerkknoten (110) unter Verwendung einer Log-Likelihood-Verhältnismessung für ein Löschereignis, wobei das Löschereignis durch eine Zahl von Kodierungsbitlöschungen definiert ist; und
Steuern einer Übertragungsleistung, die durch das Benutzergerät (120) auf dem ersten Kanal verwendet wird, unter Verwendung von vordefinierten Übertragungsleistungsbefehlswerten, die durch das Benutzergerät auf einem zweiten Kanal empfangen werden, wobei der zweite Kanal zwischen dem Benutzergerät (120) und dem Netzwerkknoten (110) besteht, und wobei die Übertragungsleistung gesteuert wird basierend auf dem angegebenen Fehlerereignis, um eine Sollfehlerrate auf dem ersten Kanal zu erzielen.

2. Verfahren nach Anspruch 1, wobei das Angeben des Fehlerereignisses eine Verwendung des Log-Likelihood-Verhältniswerts eines Bits umfasst, um anzugeben, dass eine Zuverlässigkeit des Bits ein tatsächlicher Wert ist.

3. Verfahren nach Anspruch 2, wobei eine erste Schwelle verwendet wird, um zu bestimmen, dass die Zuverlässigkeit des Bits ein tatsächlicher Wert ist, wobei ein Bit als eine Kodierungsbitlöschung definiert ist, wenn die Größe des Log-Likelihood-Verhältniswerts des Bits kleiner als die erste Schwelle ist.

4. Verfahren nach Anspruch 2, wobei das Fehlerereignis angegeben wird, wenn die Zahl von Log-Likelihood-Verhältniswerten der Serie von Bits, die eine Größe kleiner als eine erste Schwelle haben, über einer zweiten Schwelle ist.

5. Verfahren nach Anspruch 1, wobei die vordefinierten Übertragungsleistungsbefehlswerte einen vordefinierten Einschaltbefehl und einen vordefinierten Ausschaltbefehl umfassen.

6. Verfahren nach Anspruch 5, ferner umfassend eine Verwendung eines voreingestellten Verhältnisses von vordefinierten Einschaltbefehlen und vordefinierten Ausschaltbefehlen über eine gegebene Zahl von Ereignissen.

7. Verfahren nach Anspruch 5, wobei der vordefinierte Einschaltbefehl verwendet wird, wenn ein Fehlerereignis angegeben wird.

8. Verfahren nach Anspruch 5, wobei der vordefinierte Ausschaltbefehl verwendet wird, wenn kein Fehlerereignis angegeben wird.

9. Verfahren nach Anspruch 1, ferner umfassend ein Initialisieren von Übertragungssteuerungsbits zur Erzielung einer Wahrscheinlichkeit des Fehlerereignisses mit Verwendung von Einschaltbefehl- und Ausschaltbefehlswerten.

10. Verfahren, umfassend:
Bestimmen von Löschcounts für eine Serie von Bits eines Uplinkkanals zwischen einem Benutzergerät (120) und einem Netzwerkknoten (110);
Generieren (706) einer Fehlerereignisangabe für die Serie von Bits unter Verwendung einer Log-Likelihood-Verhältnismessung des bestimmten Löschcounts;
Bestimmen (708, 710, 712) von Übertragungsleistungssteuerbefehlen zur Einstellung der Leistung, die durch das Benutzergerät (120) verwendet wird, basierend auf dem Fehlerereignis, und
Senden (714) einer Sollleistungssteuerung zu dem Benutzergerät (120) unter Verwendung der Übertragungsleistungssteuerbefehle.

11. Verfahren nach Anspruch 10, ferner umfassend eine Bestimmung der Sollleistungssteuerung.

12. Verfahren nach Anspruch 10, ferner umfassend eine Initialisierung von Verwendungsprozentsätzen der Übertragungsleistungssteuerbefehle zur Einstellung der Leistung, die durch das Benutzergerät (120) verwendet wird, um eine Sollleistungssteuerung zu erzielen.

13. Verfahren nach Anspruch 12, ferner umfassend eine Verwendung einer Zufallszahlvariablen mit den Verwendungsprozentsätzen der Übertragungsleistungsbefehle, um die Sollleistungssteuerung zu erzielen.

14. Verfahren nach Anspruch 10, wobei die Übertragungsleistungsbefehle einen Einschaltbefehl und einen Ausschaltbefehl umfassen, und die Fehlerereignisangabe verwendet wird, um eine Verwendung des Einschaltbefehls und des Ausschaltbefehls zu bestimmen.

15. Verfahren nach Anspruch 10, wobei die Generierung (706) des Fehlerereignisses eine Verwendung des Log-Likelihood-Verhältniswerts eines Bits umfasst, um eine Zuverlässigkeit dafür anzugeben, dass das Bit ein tatsächlicher Wert ist, und die Fehlerereignisangabe generiert wird, wenn die Zahl von Log-Likelihood-Verhältniswerten der Serie von Bits, die eine Größe kleiner als eine erste Schwelle haben, über einer zweiten Schwelle ist.

16. Gerät, umfassend:
ein Sende-Empfangsgerät (126, 128) zum Senden und Empfangen von Befehlen zwischen einem Benutzergerät (120) und einem Netzwerkknoten (110);
einen Prozessor (122), der mit dem Sende-Empfangsgerät (126, 128) gekoppelt ist,
wobei das Gerät **dadurch gekennzeichnet ist, dass** der Prozessor dazu ausgelegt ist, ein Fehlerereignis für eine Serie von Bits auf einem ersten Kanal zwischen dem Benutzergerät (120) und dem Netzwerkknoten (110) unter Verwendung einer Log-Likelihood-Verhältnismessung für ein Löschereignis anzugeben, wobei das Löschereignis durch eine Zahl von Kodierungsbitlöschungen definiert ist, und die Übertragungsleistung, die durch das Sende-Empfangsgerät (126, 128) auf dem ersten Kanal verwendet wird, unter Verwendung von vordefinierten Übertragungsleistungsbefehlswerten zu steuern, die auf einem zweiten Kanal zwischen dem Benutzergerät (120) und dem Netzwerkknoten (110) empfangen werden, und die Übertragungsleistung auf dem ersten Kanal basierend auf dem angegebenen Fehlerereignis zu steuern, um eine Sollfehlerrate auf dem ersten Kanal zu erzielen.

17. Gerät nach Anspruch 16, wobei das Fehlerereignis den Log-Likelihood-Verhältniswert eines Bits verwendet, um anzugeben, dass die Zuverlässigkeit des Bits ein tatsächlicher Wert ist.

18. Gerät nach Anspruch 16, wobei der Prozessor (122) dazu ausgelegt ist, die Übertragungsleistung zu steuern unter Verwendung eines voreingestellten Verhältnisses von Einschaltbefehlen und Ausschaltbefehlen für eine gegebene Zahl von Ereignissen.

19. Gerät nach Anspruch 16, wobei der Prozessor (122) dazu ausgelegt ist, Übertragungssteuerbits zu initialisieren zur Erzielung einer Wahrscheinlichkeit eines Fehlerereignissollwerts mit Verwendung von Einschaltbefehlswerten und Ausschaltbefehlswerten.

20. Gerät nach Anspruch 16, wobei der Prozessor (122) dazu ausgelegt ist, eine Zufallszahlvariable mit den Verwendungsprozentsätzen der Übertragungsleistungsbefehle zu verwenden, um die Sollleistungssteuerung zu erzielen.

21. Gerät nach Anspruch 17, wobei der Prozessor dazu ausgelegt ist, das Fehlerereignis anzugeben, wenn die Zahl von Log-Likelihood-Verhältniswerten der Serie von Bits, die eine Größe kleiner als eine erste Schwelle haben, über einer zweiten Schwelle ist.

## Revendications

1. Procédé comprenant :
l'indication d'un événement d'erreur pour une série de bits sur un premier canal entre un équipement d'utilisateur (120) et un noeud de réseau (110) en utilisant une mesure du logarithme du rapport de vraisemblance pour un événement d'effacement, l'événement d'effacement défini par un nombre d'effacements de bits codés ; et
le contrôle de puissance de transmission utilisée par l'équipement d'utilisateur (120) sur le premier canal en utilisant des valeurs prédéfinies de commande de puissance de transmission reçues par l'équipement d'utilisateur sur un deuxième canal, dans lequel le deuxième canal se trouvant entre l'équipement d'utilisateur (120) et le noeud de réseau (110) et dans lequel la puissance de transmission se contrôle sur base de l'événement d'erreur indiqué pour réaliser un taux d'erreur cible sur le premier canal.

2. Procédé selon la revendication 1, dans lequel l'indication de l'événement d'erreur comprend l'utilisation de la valeur du logarithme du rapport de vraisemblance d'un bit pour indiquer une fiabilité du bit qui est une valeur réelle.

3. Procédé selon la revendication 2, dans lequel un premier seuil est utilisé pour déterminer la fiabilité du bit qui est une valeur réelle, dans lequel un bit est défini pour être un effacement de bit codé lorsque la magnitude de la valeur du logarithme du rapport de vraisemblance du bit est inférieure au premier seuil.

4. Procédé selon la revendication 2, dans lequel l'événement d'erreur est indiqué lorsque le nombre de valeurs du logarithme du rapport de vraisemblance des séries de bits ayant une magnitude inférieure à un premier seuil est supérieur à un deuxième seuil.

5. Procédé selon la revendication 1, dans lequel les valeurs prédéfinies de commande de puissance de transmission incluent une commande prédéfinie d'augmentation de puissance et une commande prédéfinie de diminution de puissance.

6. Procédé selon la revendication 5, comprenant en outre l'utilisation d'une proportion établie de commandes prédéfinies d'augmentation de puissance et de commandes prédéfinies de diminution de puissance sur un nombre donné d'événements.

7. Procédé selon la revendication 5, dans lequel la commande prédéfinie d'augmentation de puissance est utilisée lorsqu'un événement d'erreur est indiqué.

8. Procédé selon la revendication 5, dans lequel la commande prédéfinie de diminution de puissance est utilisée lorsqu'il n'y a pas d'événement d'erreur indiqué.

9. Procédé selon la revendication 1, comprenant en outre l'initialisation de transmission de bits de contrôle pour réaliser une probabilité de l'événement d'erreur en utilisant des valeurs de commande d'augmentation et de diminution.

10. Procédé comprenant :
la détermination de nombres d'effacement pour une série de bits d'un canal de liaison montante entre un équipement d'utilisateur (120) et un noeud de réseau (110) ;
la génération (706) d'une indication d'événement d'erreur pour la série de bits en utilisant une mesure du logarithme du rapport de vraisemblance du nombre d'effacement déterminé ;
la détermination (708, 710, 712) de commandes de contrôle de puissance de transmission pour ajuster la puissance utilisée par l'équipement d'utilisateur (120) sur base de l'événement d'erreur, et
l'envoi (714) de contrôle de puissance cible à l'équipement d'utilisateur (120) en utilisant les commandes de contrôle de puissance de transmission.

11. Procédé selon la revendication 10, comprenant en outre la détermination du contrôle de puissance cible.

12. Procédé selon la revendication 10, comprenant en outre l'initialisation des pourcentages d'utilisation des commandes de contrôle de puissance de transmission pour ajuster la puissance utilisée par l'équipement d'utilisateur (120) pour réaliser un contrôle de puissance cible.

13. Procédé selon la revendication 12, comprenant en outre l'utilisation d'une variable de nombre aléatoire avec les pourcentages d'utilisation des commandes de puissance de transmission pour réaliser le contrôle de puissance cible.

14. Procédé selon la revendication 10, dans lequel les commandes de puissance de transmission incluent une commande d'augmentation et une commande de diminution et l'indication d'événement d'erreur est utilisée pour déterminer l'utilisation de la commande d'augmentation et de la commande de diminution.

15. Procédé selon la revendication 10, dans lequel la génération (706) de l'événement d'erreur comprend l'utilisation de la valeur du logarithme du rapport de vraisemblance d'un bit pour indiquer une fiabilité du bit qui est une valeur réelle et l'indication d'événement d'erreur est générée lorsque le nombre de valeurs du logarithme du rapport de vraisemblance des séries de bits ayant une magnitude inférieure à un premier seuil est supérieur à un deuxième seuil.

16. Appareil comprenant :
un émetteur-récepteur (126, 128) pour transmettre et recevoir des commandes entre un équipement d'utilisateur (120) et un noeud de réseau (110) ;
un processeur (122) couplé à l'émetteur-récepteur (126, 128),
l'appareil étant **caractérisé en ce que** le processeur est configuré pour indiquer un événement d'erreur pour une série de bits sur un premier canal entre l'équipement d'utilisateur (120) et le noeud de réseau (110) en utilisant une mesure du logarithme du rapport de vraisemblance pour un événement d'effacement, l'événement d'effacement défini par un nombre d'effacements de bits codés, et contrôler la puissance de transmission utilisée par l'émetteur-récepteur (126, 128) sur le premier canal en utilisant des valeurs prédéfinies de commande de puissance de transmission reçues sur un deuxième canal entre l'équipement d'utilisateur (120) et le noeud de réseau (110) et contrôler la puissance de transmission sur le premier canal sur base de l'événement d'erreur indiqué pour réaliser un taux d'erreur cible sur le premier canal.

17. Appareil selon la revendication 16, dans lequel l'événement d'erreur utilise la valeur du logarithme du rapport de vraisemblance d'un bit pour indiquer la fiabilité du bit qui est une valeur réelle.

18. Appareil selon la revendication 16, dans lequel le processeur (122) est configuré pour contrôler la puissance de transmission en utilisant une proportion établie commandes d'augmentation de puissance et de commandes de diminution de puissance sur un nombre donné d'événements.

19. Appareil selon la revendication 16, dans lequel le processeur (122) est configuré pour initialiser la transmission de bits de contrôle pour réaliser une probabilité d'une cible d'événement d'erreur en utilisant des valeurs de commande d'augmentation et des valeurs de commande de diminution.

20. Appareil selon la revendication 16, dans lequel le processeur (122) est configuré pour utiliser une variable de nombre aléatoire avec les pourcentages d'utilisation des commandes de puissance de transmission pour réaliser le contrôle de puissance cible.

21. Appareil selon la revendication 17, dans lequel le processeur est configuré pour indiquer l'événement d'erreur lorsque le nombre de valeurs du logarithme du rapport de vraisemblance des séries de bits ayant une magnitude inférieure à un premier seuil est supérieur à un deuxième seuil.
